Europäisches Patentamt

European Patent Office

Office européen des brevets

(19)

(11) **EP 0 711 049 A1**

(12) **DEMANDE DE BREVET EUROPEEN**

(43) Date de publication:
08.05.1996 Bulletin 1996/19

(51) Int Cl.⁶: **H04L 7/04**

(21) Numéro de dépôt: 95402453.5

(22) Date de dépôt: 03.11.1995

(84) Etats contractants désignés:
**DE ES GB IT NL SE**

(30) Priorité: **07.11.1994 FR 9413318**

(71) Demandeur: **ALCATEL TELSPACE**
**F-92734 Nanterre Cédex (FR)**

(72) Inventeurs:
• **Thebault, Bertrand**
**F-35360 Montauban de Bretagne (FR)**

• **Sehier, Philippe**
**F-92300 Levallois Perret (FR)**

(74) Mandataire: **Scheer, Luc et al**
**SOSPI**
**14-16, rue de la Baume**
**F-75008 Paris (FR)**

(54) **Procédé de détection de symboles de référence pour récepteur de données numériques**

(57) L'invention concerne notamment un procédé de détection de symboles de référence dans un train de données numériques constitué de trames successives. Chaque trame comporte R symboles de référence et I symboles d'information, les R symboles de référence étant équidistants dans le train de données numériques. Le procédé consiste à échantillonner le signal reçu à une période $T_e = T_s/N_e$ avec $N_e$ entier au moins égal à 2 et $T_s$ le temps symbole, et à calculer tous les $T_e$ une inter-corrélation, chaque inter-corrélation calculée fournissant une grandeur $I_n$ égale à :

$$I_n = \sum_{k=0}^{q-1} \left| \sum_{d=kr}^{(k+1)r-1} x_{n+dN_e} S_{d,k}^* \right|$$

où $x_{n+dN_e}$ représente l'échantillon reçu à l'instant $n+dN_e$, $S_{d,k}^*$ représente le complexe conjugué du symbole de référence d'indice d, $k \in \{0,..., R-1\}$ et représente l'indice de trame, $r = R/q$, avec q entier au moins égal à 1, les inter-corrélations étant ensuite sommées sur M trames pour former des niveaux d'énergie $J_{M,d}$ égaux à :

$$J_{M,d} = \sum_{m=0}^{M-1} I_{mN_e(R+I)+d}$$

où m est l'indice de trame, M le nombre d'accumulations réalisées et $d \in \{0,...., N_e(R+I)-1\}$, le procédé comprenant en outre une étape de détection de la plus grande des quantités

$$J_{M,D} = \underset{d}{MAX}\ J_{M,d},$$

la position D du maximum correspondant à celle des symboles de référence dans les trames reçues.

FIG.2

## Description

Le domaine de l'invention est celui de la transmission de données numériques et concerne plus précisément un procédé de détection de symboles de référence pour un récepteur recevant un train de données numériques, par exemple transmis par faisceaux hertzien. L'invention s'applique à tout type de modulation de phase (MDP-M; Modulation de phase à M états de phase) et/ou d'amplitude (MDAP-M; Modulation de phase et d'amplitude à M états) d'un train numérique continu comprenant des symboles de référence, et notamment à un dispositif de récupération de rythme.

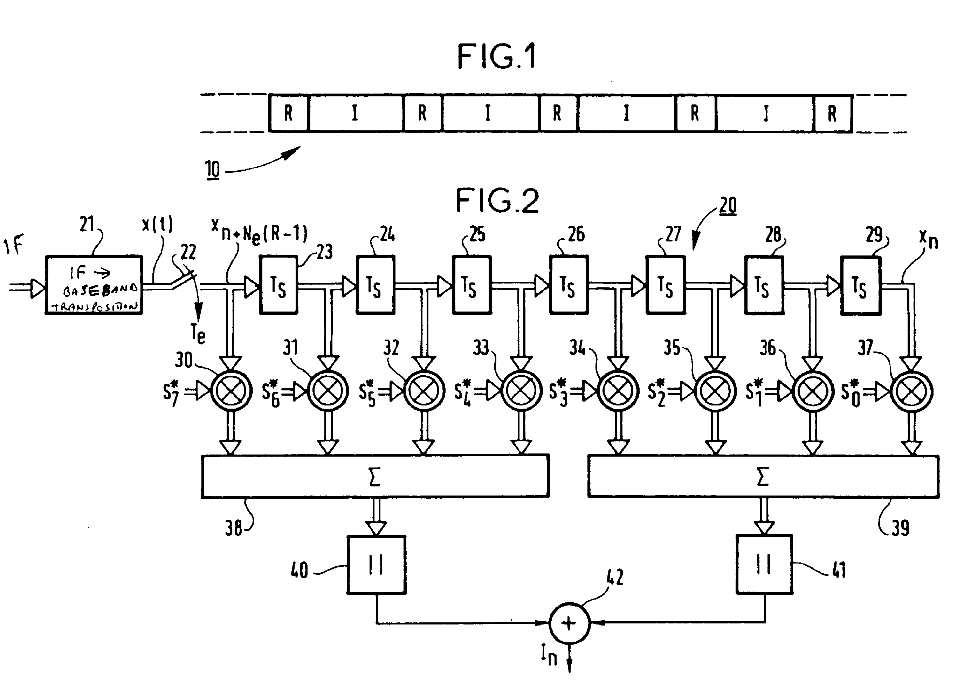

Lorsqu'un train de données numériques est transmis à un récepteur, celui-ci doit effectuer une récupération d'horloge, appelée récupération de rythme, pour échantillonner le signal reçu aux instants optimaux, lorsque le diagramme de l'oeil du signal reçu est le plus ouvert. Dans le cadre de la présente invention, le train de données reçu est continu dans le temps et se présente sous la forme représentée à la figure 1.

La figure 1 représente une partie d'un train numérique 10 tel que considéré dans la présente invention. Le train numérique 10 est constitué de trames successives et contiguës, chaque trame comportant R symboles de référence et I symboles d'information (données utiles). Au niveau de l'émetteur d'un tel train 10, R symboles de référence sont insérés tous les I symboles d'information et les R symboles de référence sont donc équidistants dans le train 10. Les R et I symboles se présentent à une période symbole Ts.

Dans l'état de la technique, les R symboles de référence sont identiques d'une trame à l'autre et le récepteur effectue, après transposition en bande de base, une corrélation entre les R symboles de référence reçus et une séquence de référence locale identique à celle de l'émetteur pour détecter la position de ces R symboles de référence. Ces symboles de référence constituent un mot de verrouillage de trame (MVT) compris dans les préambules de paquets transmis. Habituellement, le récepteur effectue un sur-échantillonnage du signal reçu, c'est à dire que le train de données numériques reçu est échantillonné à une période $T_e = T_s/N_e$ avec $N_e$ entier au moins égal à 2.

Les limites de ce type de recherche de synchronisation se manifestent lorsque la transmission est bruitée. Il n'est alors plus possible de se synchroniser sur chaque mot de verrouillage de trame, sauf à rallonger la longueur du MVT. On diminue cependant dans ce cas le rendement de trame car les pertes d'insertion augmentent.

La présente invention a notamment pour objectif de pallier cet inconvénient. Plus précisément, un des objectifs de l'invention est de fournir un procédé de détection de symboles de référence régulièrement insérés dans un train numérique, où le rapport entre le nombre de données utiles et le nombre R de symboles de référence est important, c'est à dire où les pertes d'insertion sont faibles.

Cet objectif, ainsi que d'autres qui apparaîtront par la suite, est atteint grâce au fait qu'une inter-corrélation est calculée tous les $T_e$ sur des trames successives, chaque inter-corrélation calculée fournissant une grandeur $I_n$ égale à:

$$I_n = \sum_{k=0}^{q-1} \left| \sum_{d=kr}^{(k+1)r-1} x_{n+dN_e} S_{d,k}^* \right|$$

où $x_{n+dN_e}$ représente l'échantillon reçu à l'instant $n+dN_e$, $S_{d,k}^*$ représente le complexe conjugué du symbole de référence d'indice d, $k \in \{0,..., R - 1\}$ et représente l'indice de trame, $r = R/q$, avec q entier au moins égal à 1, ces inter-corrélations étant sommées sur M trames pour former des niveaux d'énergie $J_{M,d}$ égaux à:

$$J_{M,d} = \sum_{m=0}^{M-1} I_{mN_e(R+I)+d}$$

où m est l'indice de trame, M le nombre d'accumulations réalisées et $d \in \{0,...., N_e (R + I) -1\}$, le procédé comprenant en outre une étape de détection de la plus grande des quantités $J_{M,D} = \underset{d}{\overset{MAX}{}} J_{M,d}$, la position D du maximum correspondant à celle des symboles de référence dans les trames reçues.

L'invention concerne également un dispositif mettant en oeuvre ce procédé, ce dispositif pouvant coopérer avec un dispositif de poursuite de synchronisation pour former un dispositif de récupération de rythme.

D'autres caractéristiques et avantages de l'invention apparaîtront à la lecture de la description suivante d'un mode de mise en oeuvre préférentiel, donné à titre illustratif et non limitatif, et des dessins annexés dans lesquels :

- la figure 1 représente une partie d'un train numérique tel que considéré dans la présente invention ;
- la figure 2 est un schéma synoptique d'un mode de mise en oeuvre préférentiel du procédé de l'invention, dans lequel est représenté un dispositif réalisant l'inter-corrélation des échantillons reçus avec ceux d'une séquence locale ;
- la figure 3 est un schéma synoptique d'un circuit réalisant une accumulation des valeurs $I_n$ de la figure 2 et la détection du maximum de ces accumulations ;
- la figure 4 est un schéma synoptique d'un dispositif de poursuite de synchronisation pouvant coopérer avec le dispositif de détection de symboles de référence des figures 2 et 3.

La figure 1 a été décrite précédemment en référence à l'état de la technique.

La figure 2 est un schéma synoptique d'un mode de mise en oeuvre préférentiel du procédé de l'invention, comprenant un dispositif réalisant l'inter-corrélation des échantillons reçus avec ceux d'une séquence locale. Ce dispositif est ici adapté pour un nombre R de symboles de référence égal à 8.

Le dispositif de la figure 2, généralement référencé par 20, comporte un module 21 réalisant une transposition en bande de base du signal FI reçu à l'aide d'un oscillateur libre, c'est à dire non asservi. Comme il sera vu par la suite, la synchronisation rythme est effectuée sur le signal non synchronisé en phase porteuse.

Le signal reçu, filtré et transposé en bande de base par le module 21 s'écrit :

$$x(t) = \sum_{k=0}^{\infty} S_k g(t - kT_s)\exp(j\delta\omega t) + n(t)$$

avec :

- g(t) un signal complexe représentant l'équivalent en bande de base de la réponse impulsionnelle du canal de transmission comprenant les filtres émission et réception ;
- n(t) un signal complexe représentant le bruit Gaussien en bande de base ;
- s(k) le $k^{\text{ième}}$ symbole complexe transmis par l'émetteur.

Le signal de sortie du module 21 est échantillonné à $T_e$ avec $N_e T_e = T_s$ où $T_s$ est le temps symbole et $N_e$ un entier supérieur ou égal à 2. On réalise ainsi un sur-échantillonnage à $N_e$ fois la fréquence symbole. Le signal échantillonné s'écrit :

$$x_d = x(dT_e) = = \sum_{k=0}^{\infty} S_k g(dT_e - kT_s)\exp(j\delta\omega dTe) + n(dT_e)$$

Le terme $\exp(j\delta\omega Te)$ caractérise la rotation de porteuse - $\delta$ est l'écart de fréquence (éventuellement affecté d'un Doppler) entre les synthétiseurs de fréquence émission et réception - d est le nombre de symboles échantillonnés par trame (d = $N_e$(R+l)), $n(dT_e)$ est le bruit Gaussien et $S_k g(dT_e - kT_s)$ représente les échantillons complexes.

Selon l'invention, les inter-corrélations sont calculées pour chaque trame reçue et sont sommées sur une pluralité de trames. Le signal échantillonné est pour cela appliqué à des jeux de bascules 23 à 29, chaque bascule comprenant $N_e$ bascules élémentaires commandées à la période $T_e$. Les symboles notés $x_{n+Ne}$(R-1) à $x_n$ sont appliqués à des multiplieurs complexes 30 à 37 fournissant des valeurs de corrélation à des sommateurs 38 et 39. Deux sommateurs sont ici utilisés, chacun suivi par un circuit de valeur absolue 40, 41. Ainsi, à chaque temps $T_e$ une corrélation est calculée entre la séquence échantillonnée et une séquence locale comprenant les éléments complexes conjugués de la séquence des R symboles. Les symboles complexes conjugués sont notés $S_d^*$ ($S_0^*$ à $S_7^*$). Pour simplifier, on suppose ici que les R symboles de référence sont identiques d'une trame à la suivante et on les note $S_d$ pour $d \in \{0,..., R-1\}$ avec R=8.

Afin d'être le moins sensible possible à la rotation de porteuse, les R symboles de référence sont partagés en q groupes de r symboles, q étant un entier ici égal à 2 (R = 8 et r = 4). Plus le nombre de symboles sur lesquels les sommations et intégrations sont effectuées est petit, plus la rotation de porteuse reste sans effet sur les résultats de ces sommations et intégrations et donc sur l'acquisition de synchronisation.

Les circuits 40 et 41 fournissent des signaux de sortie qui sont sommés dans un additionneur 42 fournissant un signal noté $I_n$ qui vaut de manière générale :

$$I_n = \sum_{k=0}^{q-1} \left| \sum_{d=kr}^{(k+1)r-1} x_{n+dN_e} S_{d,k}^* \right|$$

Les R symboles de référence sont généralement notés $S_{d,k}^*$ car ils peuvent être différents d'une trame à la suivante. On a cependant intérêt à limiter la périodicité des symboles de référence dans les trames pour obtenir une acquisition de synchronisation rapide. Dans ce cas, si les symboles de référence sont identiques dans les différentes trames, $S_{d,k}^*$ est égal à $S_d^*$.

Le signal $I_n$ est un signal discret qui évolue au cours du temps, à chaque $T_e$, et qui présente un pic lorsque la séquence locale est en phase avec celle présente dans le signal reçu. Pour réaliser l'acquisition, il faut choisir parmi les $N_e$(R+l) positions possibles du signal reçu par rapport à la séquence locale celle pour laquelle le maximum d'énergie est détecté. Cependant, en présence de bruit, le calcul des quantités $I_n$ est peu fiable car il ne porte que sur peu de symboles (R = 8 dans l'exemple considéré). C'est pourquoi l'invention propose d'accumuler ces quantités sur un nombre M de trames pour former des niveaux d'énergie $J_{M,d}$ égaux à :

$$J_{M,d} = \sum_{m=0}^{M-1} I_{mN_e(R+I)+d}$$

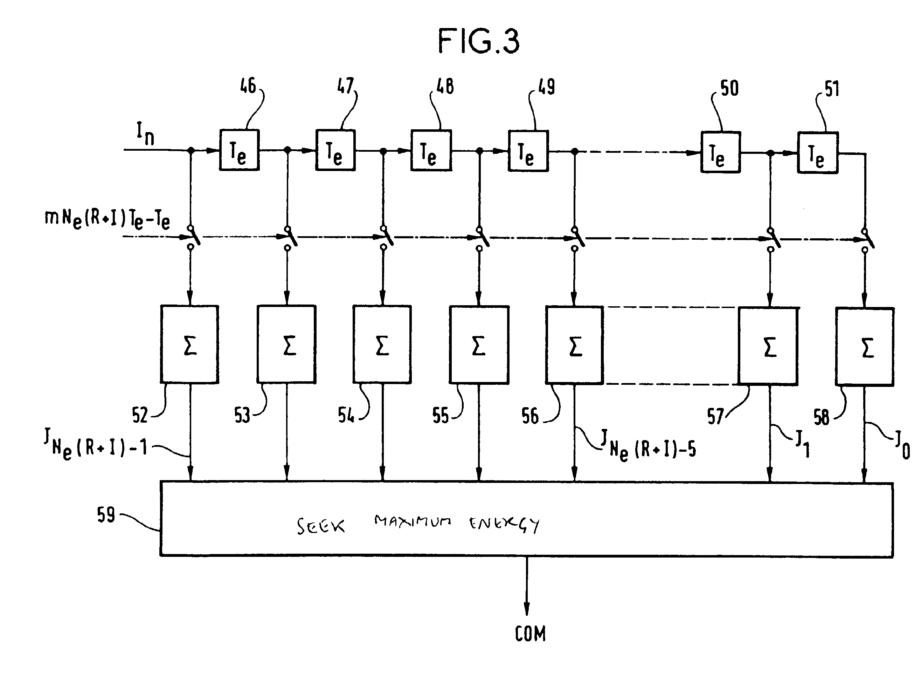

où m est l'indice de trame, M le nombre d'accumulations successives réalisées et $d \in \{0,..., N_e (R + I)-1\}$. Ces M accumulations d'énergie peuvent être réalisées à l'aide d'un dispositif conforme à la figure 3 qui est un schéma synoptique d'un circuit réalisant une accumulation des valeurs $I_n$ et la détection du maximum de ces accumulations.

Le circuit de la figure 3 reçoit tous les temps $T_e$ un signal $I_n$ appliqué à une pluralité de bascules 46 à 51 fonctionnant à la période $T_e$. Le signal $I_n$ ainsi que les signaux de sortie des bascules sont appliqués tous les $mN_e(R+I)T_e$-$T_e$ à des accumulateurs 52 à 58 correspondants, de manière à appliquer à ces accumulateurs des énergies détectées aux mêmes instants dans les m trames considérées, par exemple successives. Les résultats des sommations constituent les niveaux d'énergie $J_{M,d}$ précédemment indiqués. Ces différents niveaux d'énergie sont ensuite appliqués à un dispositif 59 de recherche d'énergie maximale qui recherche la position temporelle D pour laquelle on a :

$$J_{M,D} = \underset{d}{MAX}\ J_{M,d} = \sum_{m=0}^{M-1} I_{mN_e(R+I)+d}$$

La position D du maximum est celle pour laquelle le maximum d'énergie est détecté et pour laquelle on est en phase avec par exemple le début d'une trame (lorsque les R symboles de référence sont situés en début de trame). Lorsque la position D est trouvée, le dispositif 59 engendre un signal COM de commande de décalage de l'origine de la trame réception de cette quantité D. Il suffit par exemple d'effectuer une remise à zéro du compteur qui gouverne l'horloge trame au D-1$^{ième}$ échantillon.

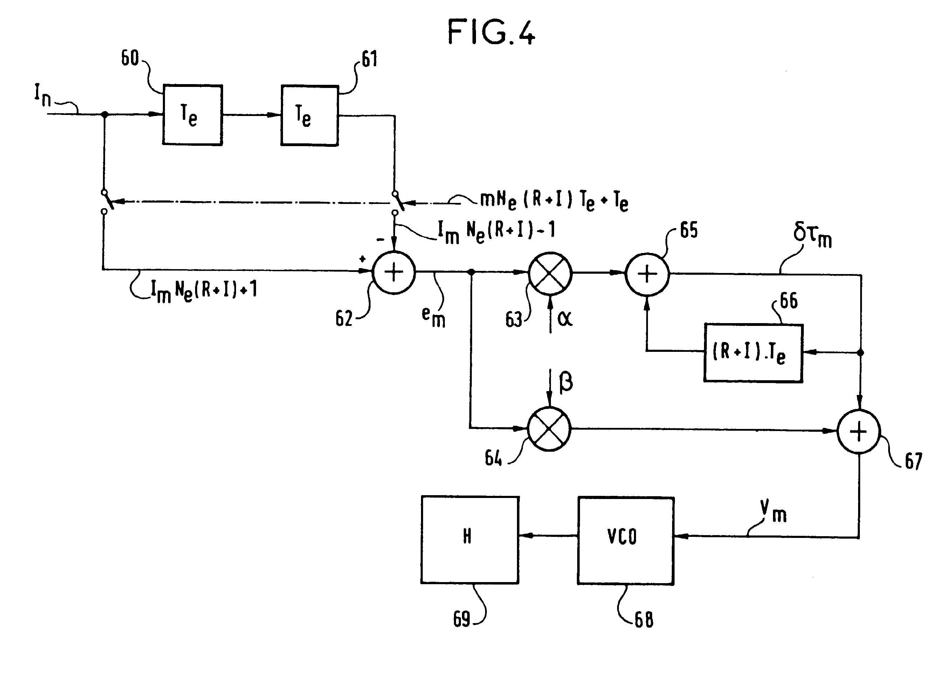

Le dispositif décrit jusqu'ici coopère avantageusement avec un dispositif de poursuite de synchronisation tel que décrit en référence à la figure 4.

Le dispositif de poursuite de synchronisation de la figure 4 comporte un estimateur fournissant un signal d'erreur $e_m$ à un filtre numérique fournissant un signal de commande $V_m$ appliqué à un oscillateur local.

L'estimateur reçoit les valeurs $I_n$ calculées par le dispositif 20 de la figure 2 et a notamment pour fonction d'engendrer un signal d'erreur $e_m$ pour chaque trame m, constitué par la différence entre deux maximums détectés entourant le pic pour lequel la synchronisation est optimale. Il comprend pour cela deux bascules 60 et 61 fonctionnant au rythme $T_e$ dont les sorties sont appliquées, au rythme $mN_e(R+I)T_e + T_e$, à un soustracteur 62. L'erreur $e_m$ est donnée par :

$$e_m = I_{mN_e(R+I)+1} - I_{mN_e(R+I)-1}$$

Cette erreur $e_m$ est appliquée au filtre numérique comportant deux multiplieurs 63, 64 recevant respectivement des valeurs de consigne $\alpha$ et $\beta$. Le multiplieur 63 fournit $\alpha.e_m$ à un sommateur 65 sur lequel est rebouclé un circuit à retard 66 de durée $(R+I).T_e$. On obtient ainsi la dérivée temporelle du rythme $\delta\tau_m$ égale à :

$$\delta\tau_m = \delta\tau_{m-1} + \alpha.e_m \qquad \text{avec } \alpha << 1$$

$\delta\tau_m$ est appliqué à un sommateur 67 recevant par ailleurs $\beta.e_m$ du multiplieur 64. Le sommateur 67 fournit un signal $V_m$ égal à :

$$V_m = \delta\tau_m + \beta e_m \qquad \text{avec } \beta << 1$$

Le signal $V_m$ est appliqué à un oscillateur 68 contrôlé en tension (VCO) suivi par un circuit 69 de génération des horloges locales.

Le dispositif de la figure 4 peut bien entendu être remplacé par tout filtre numérique réalisant une interpolation entre les niveaux d'énergie $I_n$ fournis pour corriger l'horloge locale afin de poursuivre le rythme des échantillons reçus.

Le principal avantage de l'invention est que la synchronisation rythme est non cohérente puisqu'elle est réalisée sur le signal transmis en bande de base dont on n'a compensé ni la phase ni l'écart de fréquence entre les horloges émission et réception. En conséquence, un décrochage de la récupération de porteuse qui aurait lieu alors que des symboles d'information utile sont reçus est sans incidence sur la récupération du rythme. De plus, le fractionnement du calcul d'inter-corrélation en groupes de modules portant sur peu de symboles (r=4) permet d'assurer une récupération du rythme même en présence de Doppler de l'ordre de 10% de la fréquence symbole, lorsque ce Doppler se manifeste alors que des symboles de référence sont reçus.

Le dispositif de l'invention est performant : il est possible en modulation MDP-2 d'obtenir une acquisition du rythme et sa poursuite pour un rapport d'énergie par bit/densité spectrale de bruit (Eb/No) inférieur à 0 dB.

**Revendications**

1. Procédé de détection de symboles de référence dans un train de données numériques constitué de trames successives, chaque trame comportant R symboles de référence et I symboles d'information, lesdits R symboles de référence étant équidistants dans ledit train de données numériques, ledit procédé consistant à calculer une inter-corrélation entre ledit train de données numériques et une séquence de référence locale comprenant lesdits symboles de référence pour détecter la position desdits R symboles de référence dans ledit train de données numérique, ledit train de données numériques étant échantillonné à une période $T_e = T_s/N_e$ avec $N_e$ entier au moins égal à 2 et $T_s$ le temps symbole, caractérisé en ce que ladite inter-corrélation est réalisée tous les $T_e$ sur des trames successives, chaque inter-corrélation calculée fournissant une grandeur $I_n$ égale à :

$$I_n = \sum_{k=0}^{q-1} \left| \sum_{d=kr}^{(k+1)r-1} x_{n+dN_e} S_{d,k}^* \right|$$

où $x_{n+dNe}$ représente l'échantillon reçu à l'instant $n+dN_e$, $S_{d,k}^*$ représente le complexe conjugué du symbole de référence d'indice d, $k \in \{0,..., R - 1\}$ et représente l'indice de trame, $r = R/q$, avec q entier au moins égal à 1, lesdites inter-corrélations étant sommées sur M trames pour former des niveaux d'énergie $J_{M,d}$ égaux à :

$$J_{M,d} = \sum_{m=0}^{M-1} I_{mN_e(R+I)+d}$$

où m est l'indice de trame, M est le nombre d'accumulations réalisées et où $d \in \{0,..., N_e (R + I) -1\}$, ledit procédé comprenant en outre une étape de détection de la plus grande des quantités $J_{M,D} = \underset{d}{MAX}\, J_{M,d}$, la position D du maximum correspondant à celle desdits symboles de référence dans lesdites trames reçues.

2. Procédé selon la revendication 1, caractérisé en ce que lesdits R symboles de référence sont identiques d'une trame à l'autre.

3. Dispositif mettant en oeuvre le procédé selon la revendication 1.

4. Dispositif selon la revendication 3, caractérisé en ce qu'il coopère avec un dispositif de poursuite de synchronisation pour former un dispositif de récupération de rythme.

# FIG.1

R | I | R | I | R | I | R | I | R | I | R | I | R | I | R

10

# FIG.2

20

IF
FI

21
IF → BASEBAND TRANSPOSITION

$x(t)$

22
$T_e$

$x_{n+N_e(R-1)}$

23 $T_S$  24 $T_S$  25 $T_S$  26 $T_S$  27 $T_S$  28 $T_S$  29 $T_S$  $x_n$

30 $S_7^*$  31 $S_6^*$  32 $S_5^*$  33 $S_4^*$  34 $S_3^*$  35 $S_2^*$  36 $S_1^*$  37 $S_0^*$

$\Sigma$ 38

$\Sigma$ 39

40 $||$

41 $||$

42 $+$

$I_n$

EP 0 711 049 A1

6

# FIG.3

EP 0 711 049 A1

FIG.4

**Office européen des brevets**

# RAPPORT DE RECHERCHE EUROPEENNE

Numero de la demande

EP 95 40 2453

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 410 532 (TELECOMMUNICATIONS RADIOELECTRIQUES ET TELEPHONIQUES T.R.T)<br>* page 1, ligne 1 - ligne 7 *<br>* page 3, ligne 30 - page 5, ligne 12 *<br>--- | 1-4 | H04L7/04 |
| A | WO-A-91 07831 (TELEFONAKTIEBOLAGET ERICSSON)<br>* page 1, ligne 3 - ligne 17 *<br>* page 3, ligne 11 - ligne 26 *<br>* page 5, ligne 30 - page 7, ligne 3 *<br>* revendications 1-3 *<br>--- | 1-4 | |
| A | PATENT ABSTRACTS OF JAPAN<br>vol. 10 no. 164 (E-410) ,11 Juin 1986<br>& JP-A-61 016655 (FUJITSU KK) 24 Janvier 1986,<br>* abrégé *<br>--- | 1-4 | |
| A | FR-A-2 342 598 (SIEMENS AKTIENGESELLSCHAFT)<br>* page 2, ligne 8 - page 4, ligne 23 *<br>* revendication 1 *<br>----- | 1-4 | **DOMAINES TECHNIQUES RECHERCHES (Int.Cl.6)**<br><br>H04L |

Le présent rapport a été établi pour toutes les revendications

| Lieu de la recherche | Date d'achèvement de la recherche | Examinateur |
|---|---|---|
| LA HAYE | 2 Janvier 1996 | Canali, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)